Europäisches Patentamt

European Patent Office

Office européen des brevets

(19)

(11) Numéro de publication: **0 364 376**
**A1**

# (12) DEMANDE DE BREVET EUROPEEN

(21) Numéro de dépôt: **89420380.1**

(51) Int. Cl.5: **C08G 69/28 , C08G 69/04**

(22) Date de dépôt: **09.10.89**

(30) Priorité: **13.10.88 FR 8814299**

(43) Date de publication de la demande:
**18.04.90 Bulletin 90/16**

(84) Etats contractants désignés:
**AT BE CH DE ES FR GB IT LI LU NL SE**

(71) Demandeur: **RHONE POULENC CHIMIE**
**25 Quai Paul Doumer**
**F-92408 Courbevoie Cédex(FR)**

(72) Inventeur: **Galland, Geneviève**
**100, rue Bugeaud**
**F-69006 Lyon(FR)**
Inventeur: **Coquard, Jean**
**Route du Crest**
**F-69290 Grezieu-La-Varenne(FR)**

(74) Mandataire: **Trolliet, Maurice et al**
**RHONE-POULENC CHIMIE Service Brevets**
**Chimie Centre de Recherches des Carrières**
**B.P. 62**
**F-69192 Saint-Fons Cédex(FR)**

(54) **Procédé de préparation de polyamides amorphes à base d'acides dicarboxyliques aromatiques et de diamines aliphatiques.**

(57) L'invention concerne un procédé de préparation de (co)polyamides amorphes à partir d'acide(s) dicarboxylique(s) aromatique(s) comme notamment l'acide isophtalique et/ou l'acide téréphtalique et de diamine-(s) aliphatique(s) comme notamment l'hexaméthylènediamine.

Conformément à ce procédé, on prépare dans une première étape, à partir des réactifs précités, deux prépolymères déséquilibrés de faible viscosité, l'un à groupements terminaux COOH excédentaires, l'autre à groupements terminaux NH$_2$ excédentaires ; puis dans une seconde étape, on mélange les deux prépolymères déséquilibrés dans des proportions données et on effectue leur post-condensation à l'état fondu dans une extrudeuse-dégazeuse comportant une ou plusieurs vis.

Les (co)polyamides amorphes ainsi préparés sont parfaitement transparents et ils peuvent se mouler aisément par injection pour conduire à des articles conformés doués de bonnes propriétés notamment en choc multiaxial.

EP 0 364 376 A1

EP 0 364 376 A1

# PROCEDE DE PREPARATION DE POLYAMIDES AMORPHES A BASE D'ACIDES DICARBOXYLIQUES AROMATIQUES ET DE DIAMINES ALIPHATIQUES

la présente invention se rapporte à un nouveau procédé de préparation de (co)polyamides amorphes à partir d'au moins un acide dicarboxylique aromatique ayant de 8 à 18 atomes de carbone et d'au moins une diamine aliphatique, linéaire ou ramifiée, ayant de 6 à 12 atomes de carbone.

Les polyamides linéaires totalement aliphatiques de type nylon, de poids moléculaire élevé, possèdent de nombreuses propriétés physiques et chimiques les rendant aptes à la production d'une grande variété de pièces conformées telles que fibres, films et autres objets moulés. Le polyhexaméthylèneadipamide ou nylon 6,6 est un exemple de polyamide ayant un développement très important.

Ces polymères montrent cependant un certain nombre de défauts dont l'importance est fonction de l'utilisation envisagée, comme par exemple un retrait au moulage qui peut être non négligeable, une reprise d'eau qui peut être importante et corollairement une stabilité dimensionnelle à l'humidité qui peut être insuffisante et des propriétés mécaniques affectées par l'humidité ambiante qui chutent, de plus, à des températures supérieures à 100°C.

De très nombreux brevets décrivent des polyamides ayant des groupements différents tels que notamment les polyamides à motifs mixtes aliphatiques et aromatiques. L'introduction de cycles aromatiques entraîne une remontée du point de fusion ou de ramollissement et de la température de transition vitreuse avec comme conséquence notamment une meilleur conservation des propriétés mécaniques à hautes températures. Des polyamides typiques de cette nature sont par exemple les copolymères amorphes obtenus à partir d'acide isophtalique (60 à 90 % en mole dans le mélange des diacides), d'acide téréphtalique et d'hexaméthylènediamine (cf. US-A-3.382.216).

Pour préparer de pareils (co)polymères amorphes, l'art antérieur propose par exemple de faire appel à la technique de polycondensation en solution selon laquelle on fait réagir le (ou les) halogénure(s) du (ou des) diacide(s) carboxylique(s), comme par exemple le (ou les) chlorure(s) de diacide(s) avec la (ou les) diamine(s) en opérant dans un solvant exempt de traces d'eau. Il est également nécessaire pour une plus grande efficacité de la polycondensation de dissoudre dans le milieu réactionnel une base organique susceptible de réagir avec l'hydracide dégagé lors de la réaction d'acylation. Une fois la polycondensation terminée, le polymère est isolé généralement par précipitation dans un non-solvant. Ce type de procédé ne présente pas un grand intérêt industriel en raison notamment du coût assez élevé des dihalogénures d'acides carboxyliques aromatiques de départ et de la complexité de l'appareillage qui doit permettre de manipuler des volumes importants de liquides par rapport à la quantité de polymère produit.

Un autre mode de préparation des (co)polyamides à base d'acide(s) dicarboxylique(s) aromatique(s) et de diamine(s) aliphatique(s), connu de l'art antérieur, consiste dans le procédé classique type nylon 6,6 de polycondensation en masse fondue. On introduit des quantités stoechiométriques de diamine(s) et de diacide(s) carboxylique(s), le cas échéant en ajoutant de l'eau, dans un autoclave en acier inoxydable. Il est quelquefois avantageux de préparer le sel de diamine(s) et de diacide(s) carboxylique(s) auparavant. On chauffe les réactifs à une température allant de 200 à 220°C environ, tout en agitant. On évacue l'eau présente et on augmente la température à environ 250-280°C. A cette température, on continue à agiter le mélange réactionnel quelque temps sous pression atmosphérique et éventuellement sous une pression inférieure, dans un courant d'azote, jusqu'au moment où le polyamide a atteint le poids moléculaire et la viscosité désirés ; pour obtenir à l'issue de cette étape des (co)polyamides conduisant après moulage à des articles conformes doués de bonnes propriétés mécaniques, il est généralement nécessaire de continuer la polycondensation jusqu'au moment où le (co)polymère a atteint des caractéristiques de viscosité, exprimées sous forme de l'indice de viscosité (IV) mesuré dans le métacrésol à 25°C sur une solution contenant 0,5 g de polymère séché dans 100 cm$^3$ de solvant, au moins égales à 100 ml/g. Or, dans ce domaine de viscosité, on se heurte au problème suivant : le (co)polyamide à l'état fondu s'écoule difficilement et de ce fait il est difficile à soutirer correctement de l'autoclave ayant servi à le préparer ; plus précisément, la pression de soutirage est élevée, le temps de soutirage est long et le taux de soutirage est faible.

Un but de la présente invention est de fournir un procédé de préparation en masse fondue (ou phase liquide) de (co)polyamides à base d'au moins un acide dicarboxylique aromatique ayant de 8 à 18 atomes de carbone et d'au moins une diamine aliphatique, linéaire ou ramifiée, ayant de 6 à 12 atomes de carbone ayant un niveau d'IV suffisant, au moins égal à 100 ml/g et de préférence compris entre 130 ml/g et 150 ml/g, avec lequel les inconvénients de soutirage précités n'apparaissent pas.

Un autre but de la présente invention est de fournir un procédé conduisant à des (co)polyamides amorphes ayant une excellente transparence. L'état de transparence est observé notamment sur des

2

granulés de polymère obtenus par découpage d'un jonc de faible diamètre obtenu à partir du polymère à l'état fondu après refroidissement rapide, par exemple par immension dans l'eau à 20°C. Un polymère transparent se prête bien à la fabrication par exemple de films d'emballage, de réservoirs techniques, de vitres de sécurité, de voyants lumineux.

Un autre but encore de la présente invention est de fournir un procédé utilisant un appareillage dont les conditions de marche peuvent être fixées aisément pour obtenir des (co)polyamides sous forme de polycondensats correspondant à l'état d'équilibre des réactions d'amidification qui se sont développées.

Il a maintenant été trouvé que l'on pouvait arriver à satisfaire en totalité les buts précités grâce au nouveau procédé conforme à la présente invention.

Plus précisément, la présente invention concerne un procédé de préparation de (co)polyamides amorphes en opérant en discontinu et en masse fondue, selon lequel on polycondense au moins un acide dicarboxylique aromatique ayant de 8 à 18 atomes de carbone avec au moins une diamine aliphatique, linéaire ou ramifiée, ayant de 6 à 12 atomes de carbone, ledit procédé étant caractérisé en ce qu'il est conduit en enchaînant les deux étapes suivantes :

- une première étape : dans laquelle on prépare séparément - de manière connue en soi suivant un procédé classique de polycondensation type nylon 6,6, à partir de compositions soit contenant le (ou les) diacide(s) et la (ou les) diamine(s) et éventuellement un catalyseur soit comprenant leur(s) sel(s) et éventuellement un catalyseur, en opérant dans un système clos de type autoclave éventuellement en présence d'eau - deux prépolymères déséquilibrés ayant chacun un IV se situant dans l'intervalle allant de 70 à 96 ml/g :

* l'un étant à groupements terminaux COOH excédentaires, c'est-à-dire préparé avec des quantités de constituants de la composition de départ telles que la différence :

d1 = GT COOH - GT NH$_2$

où GT COOH représente le taux de groupements terminaux COOH et GT NH$_2$ représente le taux de groupements terminaux NH$_2$, se situe dans l'intervalle allant de 170 à 260 méq/kg, la détermination des taux de groupements terminaux étant effectuée selon les indications données ci-après dans le présent mémoire, et

* l'autre étant à groupements terminaux NH$_2$ excédentaires, c'est-à-dire prépare avec des quantités de constituants de la composition de départ telles que la différence :

d2 = GT NH$_2$ - GT COOH

se situe aussi dans l'intervalle allant de 170 à 260 méq/kg ;

- une seconde étape dans laquelle :

* on mélange directement à l'état solide les deux prépolymères déséquilibrés, d'une manière quelconque permettant une bonne homogénéisation, dans des proportions pondérales telles que la différence :

ΔGT = Σ GT COOH (prépolymères) - Σ GT NH$_2$ (prépolymères)

se situe, en valeur absolue, dans l'intervalle allant de 100 méq/kg à 160 méq/kg, puis

* on réalise ensuite la réaction d'achèvement de la polycondensation, en effectuant la post-condensation à l'état fondu des deux prépolymères déséquilibrés, en opérant à chaud dans une extrudeuse-dégazeuse comportant une ou plusieurs vis :

. les paramètres de marche essentiels de ladite extrudense-dégazeuse consistant dans : la température de la zone de réaction qui se situe dans l'intervalle allant de 255°C à 295°C, la pression de dévolatilisation de cette zone qui se situe dans l'intervalle allant de 2.10$^2$ Pa à 1000.10$^2$ Pa et le temps de séjour du mélange dans l'extrudeuse- dégazeuse qui se situe dans l'intervalle allant de 30 secondes à 2 minutes,

. étant choisis, à l'intérieur des intervalles précités, de manière à obtenir à la sortie de l'extrudeuse-dégazeuse des (co)polyamides se présentant sous forme de polycondensats correspondant à l'état d'équilibre des réactions d'amidification et ayant un IV se situant dans l'intervalle allant de 100 ml/g à 150 ml/g et, de préférence, allant de 130 ml/g à 150 ml/g.

Dans ce qui précède, la différence ΔGT des taux de groupements terminaux COOH et NH$_2$ est celle qui est établie au niveau de l'ensemble des deux prépolymères déséquilibrés et elle est calculée, de manière connue en soi, à partir des taux des groupements terminaux et des proportions respectives de chacun des deux prépolymères déséquilibrés mis en mélange.

Dans ce qui précède encore, par l'expression "zone de réaction", on entend définir la zone de l'extrudeuse-dégazeuse qui est chauffée, comprise entre la zone d'alimentation et la filière terminale, où les deux prépolymères déséquilibrés en mélange se trouvent à l'état fondu, sont soumis à des forces de cisaillement de degrés variables et subissent la réaction de post-condensation souhaitée nécessitant l'élimination, par un dégazage approprié, de l'eau de condensation formée.

Des compositions de départ (cf. première étape) contenant soit l'acide isophtalique et/ou l'acide téréphtalique et l'hexaméthylènediamine, plus éventuellement un catalyseur, soit leur(s) sel(s) plus éventuellement un catalyseur, sont parfaitement appropriées pour mettre en oeuvre le procédé selon la présente invention. Avantageusement, on part de compositions contenant soit l'acide isophthalique, l'acide téréphtalique et l'hexaméthylènediamine, plus éventuellement un catalyseur, soit leur(s) sel(s) plus éventuellement un catalyseur, dans lesquelles la quantité d'acide isophtalique dans le mélange des deux acides se situe dans l'intervalle allant de 60 à 90 % en mole.

Dans le cadre de ce mode opératoire avantageux, on va examiner maintenant plus en détail comment sont préparés les deux prépolymères déséquilibrés mis en oeuvre dans le procédé de l'invention.

Le prépolymère à groupements terminaux COOH excédentaires peut être préparé en faisant réagir, éventuellement en présence d'eau, les composés consistant :

- C1, soit dans un mélange : acide isophthalique + acide téréphtalique + hexaméthylènediamine + éventuellement un catalyseur, apportant des nombres de groupes COOH et $NH_2$ équivalents,

- C2, soit dans le sel stoechiométrique : acides (isophtalique + téréphtalique)/hexaméthylènediamine, pris seul ou en mélange éventuellement avec un catalyseur,

- C3, soit dans le mélange : sel stoechiométrique acide isophtalique/hexaméthylènediamine + sel stoechiométrique acide téréphtalique/hexaméthylènediamine + éventuellement un catalyseur,

- quantité d'acide isophtalique, dans le mélange des diacides mis en oeuvre pour confectionner les composés C1, C2 ou C3, se situant dans l'intervalle allant de 60 à 90 % en mole,

- la valeur de la différence d1 = GT COOH - GT $NH_2$ étant réglée à la valeur souhaitée par ajout d'un excès calculé d'acides isophtalique et téréphtalique (la quantité d'acide isophthalique, dans le mélange des diacides ajoutés à titre d'excès, se situant là aussi dans l'intervalle allant de 60 à 90 % en mole) dans le composé C1, C2 ou C3 ; plus précisément, cet excès, exprimé par le pourcentage molaire des diacides en excès suivant la relation :

$$\frac{\text{nombre total de moles de diacides} - \text{nombre de moles de diacides du composé C1, C2 ou C3}}{\text{nombre de moles de diacides du composé C1, C2 ou C3}} \times 100$$

doit se situer dans l'intervalle allant de 2,1 % à 3,4 %.

S'agissant de la manière pratique de préparer le prépolymère à groupements terminaux COOH excédentaires, on fera noter qu'elle consiste généralement à effectuer les opérations suivantes :

- on amène progressivement par chauffage le mélange de départ sous une pression autogène de vapeur d'eau se situant dans l'intervalle allant d'une valeur juste supérieure à la pression atmosphérique à 3 MPa. La pression autogène de vapeur d'eau souhaitée est obtenue par un chauffage progressif pendant par exemple une durée allant de 10 minutes à 2 heures jusqu'à une température allant de 180°C à 220°C ;

- puis, la pression étant maintenue à la valeur de la pression autogène, on élimine par distillation régulière, sur une période de temps allant par exemple de 30 minutes à 1 heure 30 minutes, l'eau présente dans le mélange réactionnel de manière à amener la température de la masse en fin de distillation à une valeur allant de 230°C à 250°C ;

- on abaisse ensuite progressivement la pression, pendant une durée allant par exemple de 40 minutes à 2 heures, de la valeur de la pression autogène jusqu'à la valeur de la pression atmosphérique et on élève dans le même temps la température de la masse à une valeur allant de 260°C à 280°C ; et

- enfin on termine la prépolymérisation en laissant réagir le mélange réactionnel à la température allant de 260°C à 280°C pendant une durée suffisante, de l'ordre par exemple de 10 minutes à 50 minutes, permettant d'obtenir un prépolymère de viscosité souhaitée.

Le prépolymère à groupements terminaux $NH_2$ excédentaires peut être préparé d'une manière similaire à celle employée pour le prépolymère à groupements terminaux COOH excédentaires. A noter que dans ce cas la valeur de la différence d2 = GT $HN_2$ - GT COOH est réglée à la valeur souhaitée par ajout d'un excès calculé d'hexaméthylènediamine (dit excès 1) dans le composé C1, C2 ou C3 ; cet excès 1, exprimé par le pourcentage molaire de diamine en excès suivant la relation :

$$\dfrac{\text{nombre total de moles de diamine - nombre de moles de diamine du composé C1, C2 ou C3}}{\text{nombre de moles de diamine du composé C1, C2 ou C3}} \times 100$$

doit se situer dans l'intervalle allant de 2,1 % à 3,4 %.

Dans le cas du prépolymère à groupements terminaux COOH excédentaires, comme dans celui du prépolymère à groupements terminaux NH$_2$ excédentaires, il peut être avantageux d'engager une quantité de diamine(s) (hexaméthylènediamine dans le cadre du mode opératoire avantageux précité) qui est supérieure à celle nécessaire (c'est-à-dire dans le cadre du mode opératoire avantageux : quantité pour avoir l'équivalence entre les groupes COOH et NH$_2$ dans le composé C1, C2 ou C3 + excès 1 dans le cas du prépolymère à groupements terminaux NH$_2$ excédentaires) de manière à introduire dans le mélange réactionnel un excès de diamine(s) (dit excès 2) permettant de compenser la perte de ce réactif qui peut intervenir lors de l'opération de distillation et/ou lors de l'opération de décompression en autoclave ; dans le cadre du mode opératoire avantageux cet excès 2, exprimé par le pourcentage molaire d'hexaméthylènediamine en excès suivant la relation :

$$\dfrac{\text{nombre total de moles de diamine - nombre de moles de diamine nécessaire}}{\text{nombre total de moles de diamine nécessaire}} \times 100$$

se situe par exemple dans l'intervalle allant de 0,1 à 3 %.

Dans le présent mémoire, la pression dont on parle est toujours la pression absolue.

Par "eau présente dans le mélange réactionnel, on entend définir l'eau qui se forme au cours de la polycondensation du (ou des) diacide(s) avec la (ou les) diamine(s), plus éventuellement l'eau introduite au départ avec les constituants du mélange réactionnel. La quantité d'eau éventuellement introduite au départ n'est pas critique et peut varier dans de larges limites.

Pour la conduite de la première étape du procédé selon l'invention, on peut engager la (ou les) diamine(s) à l'état solide à l'état fondu ou sous forme de solution aqueuse. Le (ou les) sel(s) de diacide(s) et de diamine(s) peut (ou peuvent) être engagé(s) également à l'état solide, à l'état fondu ou sous forme de solution aqueuse.

Selon une modalité préférée de mise en oeuvre de la première étape du procédé selon l'invention, chaque prépolymère déséquilibré est préparé en engageant les réactifs sous forme de sel(s) stoechiométrique(s) dérivé(s) de diacide(s) et de diamine(s) [sel stoechiométrique acides (isophtalique + téréphtalique)/hexaméthylènediamine dans le cas du mode opératoire avantageux précité ] et en faisant appel à un catalyseur (composé C2 dans le cas du mode opératoire avantageux). Pour réaliser d'une part la stoechiométrie dans la fabrication du (ou des) sel(s) de diacide(s) et de diamine(s) et d'autre part le dépassement voulu de la stoechiométrie par ajout d'acide(s) (pour atteindre la valeur d1 souhaitée) ou de diamine(s) (pour atteindre la valeur d2 souhaitée), on peut opérer par pesée précise des réactifs de titre parfaitement connu au moment de la mise en oeuvre. Il est préférable de contrôler la stoechiométrie par mesure du pH de solutions échantillons obtenues par dilution du (ou des) sel(s) dans un solvant approprié.

S'agissant du catalyseur qui peut être utilisé, il consiste généralement soit en un composé ($\alpha$), soit en un composé ($\beta$), ($\alpha$) désignant un mono- ou polyacide oxygéné minéral ou un mono- ou polyacide oxygéné organique autre qu'un acide carboxylique, dont l'une au moins des fonctions acides possède une constante d'ionisation pka dans l'eau à 25°C égale ou inférieure à 4, ($\beta$) désignant un sel alcalin ou alcalino-terreux de cet acide.

Comme acides forts qui conviennent on peut citer par exemple :
- parmi les oxyacides minéraux, les acides sulfureux, sulfurique, hypophosphoreux, phosphoreux, orthophosphorique ou pyrophosphorique ;
- parmi les oxyacides organiques :
. les acides organosulfoniques de formule R$_1$ - SO$_3$H (I) dans laquelle R$_1$ représente : un radical alkyle linéaire ou ramifié ayant de 1 à 6 atomes de carbone ; un radical phényle éventuellement substitué par 1 à 3 radicaux alkyles ayant de 1 à 3 atomes de carbone ; un radical phénylalkyle comportant de 1 à 3 atomes de carbone dans le reste alkyle et dont le noyau benzénique peut éventuellement être substitué par 1 à 3 radicaux alkyles ayant de 1 à 3 atomes de carbone ; ou un radical naphtyle éventuellement substitué par 1 à 4 radicaux alkyles ayant de 1 à 3 atomes de carbone ;

. les acides organophosphoniques de forme $R_2 - P(O)(OH)_2$ (II) dans laquelle $R_2$ représente un radical alkyle, un radical phényle ou un radical phénylalkyle, chacun de ces radicaux ayant la définition donnée ci-avant pour $R_1$ ;

. les acides organophosphiniques de formule $R_3R_4 - P(O)(OH)$ (III) dans laquelle $R_3$ et $R_4$, identiques ou différents, représentent chacun : un radical alkyle linéaire ayant de 1 à 3 atomes de carbone ; un radical phényle ou un radical phénylalkyle, chacun de ces deux derniers radicaux ayant la définition donnée ci-avant pour $R_1$ ;

. les acides organophosphoneux de forme $R_5H - P(O)(OH)$ (IV) dans laquelle $R_5$ représente : un radical alkyle linéaire ou ramifié ayant de 1 à 4 atomes de carbone (la ramification étant exclue pour un radical alkyle à 4 atomes de carbone) ; un radical phényle ou un radical phénylalkyle, chacun de ces deux dernieres radicaux ayant la définition donnée ci-avant pour $R_1$.

On préfère utiliser comme acide fort ($\alpha$), les acides dérivés du phosphore et plus particulièrement les acides hypophosphoreux, phosphoreux, orthophosphorique, pyrophosphorique, méthylphosphonique, phé-nylphosphonique, benzylphosphonique, diméthylphosphinique, diphénylphosphinique, méthylphénylphos-phinique, dibenzylphosphinique, méthylphosponeux, phénylphosphoneux ou benzylphosphoneux.

Pour ce qui est du sel d'acide ($\beta$), on fait appel généralement à des sels de métaux alcalins ou de métaux alcalino-terreux dérivés des oxyacides minéraux ou organiques ($\alpha$).

On préfère utiliser comme sel ($\beta$), ceux qui sont totalement solubles dans le mélange réactionnel. Parmi ces sels ($\beta$) préférés, conviennent bien les sels de sodium et de potassium issus des types particuliers d'oxyacides minéraux ou organiques ($\alpha$) qui conviennent cités ci-avant. Les sels ($\beta$) qui conviennent tout particulièrement bien sont les sels de sodium et de potassium issus des acides préférés dérivés du phosphore cités nommément ci-avant.

Les proportions d'acide fort ($\alpha$) ou de sel ($\beta$), exprimées en pourcentage en poids par rapport au prépolymère final, sont comprises généralement entre 0,01 et 1 % et de préférence entre 0,01 et 0,5 %.

Le procédé selon la présente invention comporte une second étape consistant à mélanger dans des proportions données les deux prépolymères déséquilibrés, puis à effectuer leur post-condensation à l'état fondu dans une extrudeuse-dégazeuse.

A propos de la conduite de cette seconde étape, on fera noter les points suivants :

Bien qu'il soit possible de partir d'un mélange des deux prépolymères déséquilibrés pour lequel la différence $\Delta GT$ dont on a parlé ci-avant est, en valeur relative, soit un nombre positif (le mélange est majoritaire en groupes COOH réactifs), soit un nombre négatif (le mélange est alors majoritaire en groupes $NH_2$ réactifs), on préférera partir d'un mélange pour lequel la différence $\Delta GT$ est un nombre positif, les risques de ramification par réactions secondaires étant minimisés dans ce cas.

La différence $\Delta GT$ et les paramètres de marche essentiels de l'extrudeuse-dégazeuse consistant, comme indiqué ci-avant, dans la température de la zone de réaction, la pression de dévolatilisation de cette zone et le temps de séjour dans l'extrudeuse sont des paramètres qui ne sont pas indépendants. Il doit être entendu qu'une bonne conduite de la seconde étape du procédé selon l'invention peut être obtenue pour une différence $\Delta GT$ donnée en plaçant par exemple la valeur de la température de la zone de réaction dans l'intervalle qui la concerne et en choisissant les valeurs des deux autres paramètres dans les intervalles qui les concernent par application des connaissances ordinaires de l'homme de métier, notamment celles concernant la variation de la pression (de vapeur d'eau) de dévolatilisation en fonction du niveau d'IV voulu pour le polymère et celles concernant l'influence des durées de réaction sur l'amidification.

Plus spécifiquement, dans le cas du mode opératoire avantageux précité faisant appel à l'acide isophtalique (60 à 90 % en mole dans le mélange des diacides), l'acide téréphtalique et l'hexaméthylènediamine, une bonne conduite de la seconde étape du procédé selon l'invention, en vue d'atteindre des valeurs d'IV situées par exemple dans l'intervalle préféré de 130 à 150 ml/g, peut être obtenu :

- en plaçant la valeur de la température de la zone de réaction dans l'intervalle qui la concerne allant de 255° C à 295° C,
- en choisissant la valeur de la pression de dévolatilisation suivant les indications du tableau qui suit :

| ∆GT (méq/kg) | Pression ($10^2$ Pa) |
|---|---|
| 100 | entre 500 et 900 |
| 120 | entre 200 et 700 |
| 140 | entre 5 et 400 |
| 160 | entre 5 et 250 |

- et en fixant un temps de séjour, pris dans l'intervalle allant de 30 secondes à 2 minutes, à une valeur permettant d'obtenir en sortie d'extrudeuse un polycondensat correspondant à l'état d'équilibre des réactions d'amidification.

S'agissant de l'extrudeuse-dégazeuse elle-même, le type d'appareil utilisable n'est pas critique dès l'instant où il est adapté pour permettre le mélange des matières plastiques à l'état fondu et est équipé d'un dispositif permettant d'évacuer des matières volatiles ou gazeuses. Comme exemples d'appareils utilisables, on citera : des extrudeuses-dégazeuses monovis telles que notamment les extrudeuses disponibles dans le commerce sous les marques : BRABANDER, PRODEX, REIFENHAUSER, SAMAFOR, THORET ; des extrudeuses-dégazeuses double vis telles que notamment les extrudeuses disponibles dans le commerce sous les marques : BUSS, ZSK, LEISTRITZ. De préférence, on fera appel à une extrudeuse-dégazeuse double vis.

Il va de soi que, dans le procédé selon l'invention, la composition des réactifs de départ peut aussi comprendre divers additifs couramment utilisés lors de la préparation des polyamides conventionnels. Ces additifs sont en particulier des agents limiteurs de chaîne tel que principalement les acides monocarboxyliques comme par exemple l'acide acétique, les agents nucléants, les stabilisants de nature variée.

Le procédé selon l'invention permet d'obtenir sans problème technique de mise en oeuvre des (co)-polyamides amorphes transparents qui peuvent être transformés de façon convenable selon les techniques usuelles d'injection pour donner des objets conformés doués de bonnes propriétés mécaniques. S'agissant des conditions de la transformation, les (co)polyamides obtenus à l'issue du procédé selon l'invention au départ par exemple d'acide isophtalique (60 à 90 % en mole dans le mélange des diacides), d'acide téréphtalique et d'hexaméthylènediamine peuvent être injectés aisément en utilisant une température matière allant de 260°C à 330°C où il n'y a pas de risque de dégradation et sous une pression matière d'injection moyenne de l'ordre par exemple de 5 MPa à 9 MPa. S'agissant des propriétés mécaniques, on entend définir par ce terme notamment les valeurs de résilience comme la résistance testée en choc multiaxial instrumenté (telle que mesurée dans les conditions définies ci-après) qui peuvent être bien supérieures à 80 J dans le cas par exemple des copolyamides d'acide isophtalique, d'acide téréphtalique et d'hexaméthylènediamine précités.

Les exemples qui suivent illustrent de manière non limitative comment la présente invention peut être mise en pratique.

Dans ces exemples un certain nombre de contrôles sont effectués. De même, diverses opérations sont mesurées. On indique ci-après les modes opératoires et/ou les normes selon lesquels ces contrôles et mesures de propriétés sont effectués.

- DETERMINATION DES TAUX DE GROUPEMENTS TERMINAUX SUR PREPOLYMERE :

Cette détermination est réalisée par dosage potentiométrique de la solution du prépolymère dans le mélange trifluoroéthanol/chloroforme 70/30 en poids par une solution d'acide trifluorométhanesulfonique 0,02 N dans le nitrobenzène. Dans le cas d'un prépolymère à groupements terminaux COOH excédentaires, ce titrage par l'acide trifluorométhanesulfonique est suivi d'un titrage en retour, sur la même prise d'essai, par une solution d'hydroxyde de tétrabutylammonium 0,1 N dans le toluène. L'exploitation de la courbe potentiométrique présentant deux sauts de potentiel permet la détermination des teneurs en groupements terminaux COOH et $NH_2$. Les résultats sont donnés en milliéquivalents gramme (méq) par kilogramme de prépolymère (méq/kg).

- INDICE DE VISCOSITE :

Cet indice est déterminé à 25°C selon la norme internationale ISO 307, édition de 1977, sur une solution contenant 0,5 g de polymère (séché pendant 2 heures à 60°C sous balayage d'argon) dans 100 cm³ de métacrésol.

- EXAMEN DE LA TRANSPARENCE :

L'état de transparence est observé à l'oeil nu d'une part sur des granulés de polymère obtenus par découpage du jonc recueilli à la sortie de l'extrudeuse et refroidi par immersion rapide dans un bain d'eau à 20°C et, d'autre part sur des éprouvettes de type barreau moulées par injection de dimensions 60 x 60 x 2 mm, préparées comme indiqué ci-après :

- RESISTANCE AU CHOC MULTIAXIAL :

Cette détermination est faite à 23°C sur les éprouvettes de type barreau précitées, conditionnées à EHO (= 0 % d'humidité relative), selon les indications de la norme NF T 51118 avec les conditions suivantes :
- masse du percuteur : 20 kg,
- hauteur de chute : 1 m,
- vitesse de l'impact : 4,1 m/s,
- énergie disponible : 168 J,
- percuteur hémisphérique de diamètre : 20 mm.
Le résultat est donné sous forme de l'énergie totale consommée dans le choc, exprimée en Joules (J).
S'agissant des éprouvettes permettant d'évaluer la transparence et de mesurer la résistance au choc multiaxial, elles sont préparées par moulage à l'aide d'une machine Vis-Piston de marque BATTENFELD - type BSKM 100/70 DS 2000 - dont les conditions de marche seront précisées dans les exemples donnés dans ce qui suit.

EXEMPLE 1 :

Dans cet exemple on décrit la préparation d'un copolyamide amorphe et transparent, à partir d'acide isophtalique (70 % en mole dans le mélange des diacides), d'acide téréphtalique (30 % en mole dans le mélange des diacides) et d'hexaméthylènediamine, ayant un indice de viscosité (IV) égal à 140 ml/g.

Première étape de préparation des prépolymères déséquilibrés :

1) Prépolymère n° 1 à groupements terminaux COOH excédentaires :

. Préparation du sel stoechiométrique acides (isoptalique + téréphtalique)/hexaméthylènediamine en solution aqueuse :

On opère dans un réacteur en acier inoxydable de 500 l muni :
- d'un système de chauffage par serpentin alimenté par de la vapeur d'eau dont la pression est maintenue constante entre $4.10^5$ Pa et $5.10^5$ Pa,
- d'un agitateur de type turbine (vitesse 1500 tours/minute),
- d'un système permettant la mise sous pression d'azote,
- d'un circuit permettant de condenser et de recueillir les produits volatils.
On introduit à froid dans le réacteur maintenu sous léger balayage d'azote :
- 291,077 kg d'une solution aqueuse à 32,4 % en poids d'hexaméthylènediamine (813,008 moles d'hexaméthylènediamine),
- 83,447 kg d'eau distillée,
- 94,472 kg d'acide isophtalique (569,106 moles),
- 40,488 kg d'acide téréphtalique (243,902 moles).
On élève la température de la masse à 60°C et on agite le mélange pendant 2 heures en maintenant le balayage d'azote. On ajuste ensuite le pH du sel à 7,60 + 0,05 par ajouts successifs de petites quantités d'hexaméthylènediamine ou d'un mélange acide isophtalique/acide téréphtalique 70/30 en mole (pH mesuré à 20°C sur une solution aqueuse à 10 % en poids de sel). On obtient ainsi une solution aqueuse à 45 % en poids de sel parfaitement stoechiométrique.

Après 3 purges à l'azote par mise sous pression de $3.10^5$ Pa puis décompression, on effectue en 45 minutes la concentration de la solution aqueuse de sel de 45 % en poids à 70 % en poids, par évaporation à la pression atmosphérique d'une partie de l'eau présente dans le milieu.

. Polycondensation en autoclave :

L'appareillage utilisé est constitué par un autoclave de 500 l en acier inoxydable agité et équipé pour travailler jusqu'à 300°C et $26.10^5$ Pa de pression. Il est muni :
- d'un système de chauffage à double enveloppe par fluide caloporteur,
- d'un agitateur type ancre (vitesse 16 tours/minute),
- d'un système permettant la mise sous pression d'azote,
- d'un circuit permettant de condenser et de recueillir les produits volatils.
Dans l'autoclave préchauffé, on introduit :
- 327,6 kg de la solution aqueuse de sel stoechiométrique à 70 % en poids qui a été préparée ci-avant,
- 2,834 kg d'acide isophtalique (17,073 moles) et 1,215 kg d'acide téréphtalique (7,317 moles) en suspension dans 10 litres d'eau distillée (pourcentage molaire des diacides en excès = 2,9 %),
- 2,329 kg d'une solution aqueuse à 32,4 % en poids d'hexaméthylènediamine (pourcentage molaire d'hexaméthylènediamine en excès = 0,8 %) pour compenser les pertes qui se produisent au cours des opérations de distillation et de décompression,
- 200 g d'une solution aqueuse d'acide hypophosphoreux à 50 % en poids,
- 100 cm³ d'antimousse silicone.
Après 3 purges à l'azote par mise sous pression de $3.10^5$ Pa puis décompression, on élève la température de la masse à 215°C en 10 minutes en maintenant la pression autogène. On atteint 1,9 MPa de pression. On distille sous une pression constante de 1,9 MPa en 1 heure 10 minutes l'eau présente dans le milieu réactionnel de manière à atteindre une température masse de 250°C. On décomprime jusqu'à pression atmosphérique en 1 heure 30 minutes et on élève dans le même temps la température de la masse à 260°C. Le prépolymère, qui a été mis sous agitation dès que la température masse a dépassé 230°C, est maintenu sous agitation à 260°C sous pression atmosphérique pendant 30 minutes environ pour atteindre l'équilibre d'amidification. Le prépolymère est alors soutiré de l'autoclave sous pression d'azote et granulé après refroidissement à l'eau.
Les caractéristiques mesurées sur ce prépolymère, appelé prépolymère n° 1, sont les suivantes :

| GT COOH (méq/kg) | GT NH$_2$ (méq/kg) | d$_1$ (méq/kg) | IV (ml/g) |
|---|---|---|---|
| 262,5 | 21,4 | 241,1 | 74,7 |

2) Prépolymère n° 2 à groupements terminaux NH$_2$ excédentaires :

Le mode opératoire est identique à celui décrit pour l'obtention du prépolymère n° 1 à groupements terminaux COOH excédentaires. La seule différence se situe an niveau des charges qui sont introduites dans l'autoclave et qui sont les suivantes :
- 327,6 kg de la solution aqueuse de sel stoechiométrique à 70 % en poids,
- 6,520 kg d'une solution aqueuse à 32,4 % en poids d'hexaméthylènediamine (pourcentage molaire d'hexaméthylènediamine en excès = 2,19 %, dit excès 1) pour régler la différence d$_2$ = GT NH$_2$ - GT COOH du prépolymère,
- 6,113 kg d'une solution aqueuse à 32,4 % en poids d'hexaméthylènediamine (pourcentage molaire d'hexaméthylènediamine en excès = 2,01 %, dit excès 2) pour compenser les pertes qui se produisent au cours des phases de distillation et de décompression,
- 200 g d'une solution aqueuse d'acide hypophosphoreux à 50 % en poids,

9

- 100 cm³ d'antimousse silicone.

Les caractéristiques mesurées sur le prépolymère obtenu, appelé prépolymère n° 2, sont résumées ci-après :

| GT COOH (méq/kg) | GT NH₂ (méq/kg) | d₂ (méq/kg) | IV (ml/g) |
|---|---|---|---|
| 18,575 | 191,5 | 172,925 | 95,0 |

Seconde étape de post-condensation en extrudeuse-dégazeuse :

Les deux prépolymères n° 1 et n° 2 sont mélangés à l'état solide dans les proportions respectives de 79,6 % en poids et 20,4 % en poids en opérant dans un mélangeur de type MORITZ, puis le mélange est broyé. En utilisant ces proportions, la différence $\Delta GT$ = GT COOH (prépolymères) -GT NH₂ - (prépolymères) est réglée à 157 méq/kg.

Avec le mélange précédent, on alimente la trémie d'une extrudeuse-dégazeuse à double vis corotatives de marque LEISTRITZ, comportant des vis de diamètre D égal à 34 mm et de longueur égale à 35 D, et comprenant : une zone d'alimentation (comportant la trémie), une zone de réaction chauffée (comportant un puits de dégazage) et une filière. Les principaux paramètres de marche de l'extrudeuse-dégazeuse sont les suivants :

- température de la zone de réaction : 260-270 °C,
- température de la filière : 260 °C,
- pression de dévolatilisation : 130.10² Pa,
- vitesse de rotation des vis : 150 tours/minute,
- débit de matière : 6 kg/h,
- temps de séjour : 1 minute.

Le polymère recueilli à la sortie de l'extrudeuse sous forme de jonc est refroidi rapidement dans un bain d'eau à 20 °C, puis il est découpé en granulés qui sont conditionnés en sac étanche pour éviter toute reprise d'humidité avant le moulage par injection. Les granulés de polymère sont parfaitement transparents. L'indice de viscosité du polymère ainsi obtenu est de 140 ml/g.

Les éprouvettes moulées par injection à partir du polymère obtenu présentent un état de transparence parfait. La résistance au choc multiaxial se traduit par une valeur (moyenne de plusieurs mesures) de l'énergie totale consommée de 110 J.

A propos du moulage des éprouvettes, il est réalisé sur la machine BATTENFELD dans les conditions suivantes : température matière : 330 °C, température du moule : 80 °C, pression matière d'injection : 7,8 MPa et pression de maintien : 5 MPa.

A titre d'essai comparatif (essai A), on a reproduit l'exemple 1 avec les mêmes réactifs et catalyseur, mais dans la seconde étape les prépolymères n° 1 et n° 2 sont mélangés dans des proportions telles que la différence $\Delta GT$ = $\Sigma$ GT COOH (prépolymères) - $\Sigma GT$ NH₂ (prépolymères) est égale à 80 méq/kg.

Plus précisément, les deux prépolymères n° 1 et n° 2 sont mélangés à l'état solide dans les proportions respectives de 61,1 % en poids et 38,9 % en poids.

Les paramètres de marche de l'extrudeuse sont identiques à ceux de l'exemple 1, sauf en ce qui concerne le débit qui est ici égal à 5 kg/h (temps de séjour : 70 secondes) et la pression de dévolatilisation qui est réglée à 200.10² Pa. En sortie d'extrudeuse, le polymère est refroidi dans l'eau à 20 °C, granulé puis conditionné en sac étanche pour éviter toute reprise d'humidité avant le moulage par injection. L'indice de viscosité du polymère obtenu dans ces conditions vaut 247 ml/g. Les granulés de polymère ne sont pas complètement transparents.

Le moulage par injection des éprouvettes nécessite, avec le polymère obtenu à l'issue de cet essai comparatif, une température matière bien supérieure à 330 °C et une pression matière d'injection supérieur à 9 MPa. De plus, les éprouvettes injectées ne sont pas du tout transparentes.

EXEMPLE 2 :

Dans cet exemple on décrit la préparation d'un copolyamide amorphe et transparent, à partir d'acide isophtalique (70 % en mole dans le mélange des diacides), d'acide téréphtalique (30 % en mole dans le mélange des diacides) et d'hexaméthylènediamine, ayant un IV de 105 ml/g.

Première étape de préparation des prépolymères déséquilibrés :

On opère exactement comme indiqué ci-avant dans l'exemple 1.

Seconde étape de post-condensation en extrudeuse-dégazeuse :

On opère là aussi exactement comme indiqué dans l'exemple 1, sauf en ce qui concerne la pression de dévolatilisation qui est réglée à $400.10^2$ Pa au lieu de $130.10^2$ Pa.

L'IV du polymère obtenu dans ces conditions est égal à 105 ml/g. Les granulés de polymère sont parfaitement transparents.

Les éprouvettes moulées par injection (température matière : 290°C ; température du moule : 80°C ; pression matière d'injection : 6 MPa ; pression de maintien : 3 MPa) présentent un état de transparence parfait. La résistance au choc multiaxial conduit à une valeur de l'énergie totale consommée de 88 J.

## Revendications

1/ Procédé de préparation de (co)polyamides amorphes en opérant en discontinu et en masse fondue, selon lequel on polycondense au moins un acide dicarboxylique aromatique ayant de 8 à 18 atomes de carbone avec au moins une diamine aliphatique, linéaire ou ramifiée, ayant de 6 à 12 atomes de carbone, ledit procédé étant caractérisé en ce qu'il est conduit en enchaînant les deux étapes suivantes :

- une première étape : dans laquelle on prépare séparément - de manière connue en soi suivant un procédé classique de polycondensation type nylon 6,6, à partir de compositions soit contenant le (ou les) diacide(s) et la (ou les) diamine(s) et éventuellement un catalyseur soit comprenant leur(s) sel(s) et éventuellement un catalyseur, en opérant dans un système clos de type autoclave éventuellement en présence d'eau - deux prépolymères déséquilibrés ayant chacun un IV se situant dans l'intervalle allant de 70 à 96 ml/g :

* l'un étant à groupements terminaux COOH excédentaires, c'est-à-dire préparé avec des quantités de constituants de la composition de départ telles que la différence :

$d1 = GT\ COOH - GT\ NH_2$

où GT COOH représente le taux de groupements terminaux COOH et GT $NH_2$ représente le taux de groupements terminaux $NH_2$, se situe dans l'intervalle allant de 170 à 260 méq/kg, et

* l'autre étant à groupements terminaux $NH_2$ excédentaires, c'est-à-dire préparé avec des quantités de constituants de la composition de départ telles que la différence :

$d2 = GT\ NH_2 - GT\ COOH$

se situe aussi dans l'intervalle allant de 170 à 260 méq/kg ;

- une seconde étape dans laquelle :

* on mélange directement à l'état solide les deux prépolymères déséquilibrés, d'une manière quelconque permettant une bonne homogénéisation, dans des proportions pondérales telles que la différence :

$\Delta GT = \Sigma\ GT\ CQOH\ (prépolymères) - \Sigma\ GT\ NH_2\ (prépolymères)$

se situe, en valeur absolue, dans l'intervalle allant de 100 méq/kg à 160 méq/kg, puis

* on réalise ensuite la réaction d'achèvement de la polycondensation, en effectuant la post-condensation à l'état fondu des deux prépolymères déséquilibrés, en opérant à chaud dans une extrudeuse-dégazeuse comportant une ou plusieurs vis :

. les paramètres de marche essentiels de ladite extrudense-dégazeuse consistant dans : la température de la zone de réaction qui se situe dans l'intervalle allant de 255°C à 295°C, la pression de dévolatilisation de cette zone qui se situe dans l'intervalle allant de $2.10^2$ Pa à $1000.10^2$ Pa et le temps de séjour du mélange dans l'extrudeuse-dégazeuse qui se situe dans l'intervalle allant de 30 secondes à 2 minutes,

. étant choisis, à l'intérieur des intervalles précités, de manière à obtenir à la sortie de l'extrudeuse-dégazeuse des (co)polyamides se présentant sous forme de polycondensats correspondant à l'état d'équilibre des réactions d'amidification et ayant un IV se situant dans l'intervalle allant de 100 ml/g à 150 ml/g.

2/ Procédé selon la revendication 1, caractérisé en ce que, dans la mise en oeuvre de la première étape, chaque prépolymère déséquilibré est préparé en engageant les réactifs sous forme de sel(s) stoechiométrique(s) dérivé(s) de diacide(s) et de diamine(s) et en faisant appel à un catalyseur.

3/ Procédé selon l'une quelconque des revendications 1 ou 2, caractérisé en ce que le catalyseur auquel on peut faire appel consiste soit en un composé ($\alpha$), soit en un composé ($\beta$), ($\alpha$) désignant un mono- ou polyacide oxygéné minéral ou un mono- ou polyacide oxygéné organique autre qu'un acide carboxylique, dont l'une au moins des fonctions acides possède une constante d'ionisation pka dans l'eau à 25°C égale ou inférieure à 4, ($\beta$) désignant un sel alcalin ou alcalino-terreux de cet acide.

4/ Procédé selon la revendication 3, caractérisé en ce que les proportions d'acide fort ($\alpha$) ou de sel ($\beta$), exprimées en pourcentage en poids par rapport au prépolymère final, sont comprises 0,01 et 1 %.

5/ Procédé selon l'une quelconque des revendications 1 à 4, caractérisé en ce que, dans la mise en oeuvre de la seconde étape, on part d'un mélange des deux prépolymères déséquilibrés pour lequel la différence $\Delta GT$ est, en valeur relative, un nombre positif.

6/ Procédé selon l'une quelconque des revendications 1 à 5, caractérisé en ce que, dans la mise en oeuvre de la première étape, le réactif acide de départ consiste dans l'acide isophtalique et/ou l'acide téréphtalique et le réactif aminé consiste dans l'hexaméthylènediamine.

7/ Procédé selon la revendication 6, caractérisé en ce que le réactif acide consiste dans l'acide isophtalique + l'acide téréphtalique, la quantité d'acide isophtalique dans le mélange des deux acides se situant dans l'intervalle allant de 60 à 90 % en mole, et le réactif aminé consiste dans l'hexaméthylènediamine.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 368 507 (BAYER AG)<br>* Revendications 1-2; page 1, ligne 25 - page 2, ligne 3; page 2, ligne 28 - page 3, ligne 2 *<br>--- | 1-7 | C 08 G 69/28<br>C 08 G 69/04 |
| A | EP-A-0 084 661 (MITSUBISHI GAS CHEMICAL CO.)<br>* Revendications 1-12 *<br>--- | 1-7 | |
| A | FR-A-1 351 588 (CELANESE CORP. OF AM.)<br>* Résumé *<br>----- | 1-7 | |

**DOMAINES TECHNIQUES RECHERCHES (Int. Cl.5)**

C 08 G

Le présent rapport a été établi pour toutes les revendications

| Lieu de la recherche | Date d'achèvement de la recherche | Examinateur |
|---|---|---|
| LA HAYE | 23-11-1989 | GLANDDIER A. |